# EUROPÄISCHE PATENTANMELDUNG

(11) **EP 3 090 651 A1**
(43) Veröffentlichungstag der Anmeldung: **09.11.2016**
(21) Anmeldenummer: 16159327.2
(22) Anmeldetag: 09.03.2016
(51) Int. Cl.: A46D 3/04, F16J 15/32, F01D 11/00, A46B 3/06

(54) **VERFAHREN ZUR HERSTELLUNG VON BÜRSTENDICHTUNGEN MIT SCHRÄGGESTELLTEN BORSTEN UND EINE ENTSPRECHENDE VORRICHTUNG**

(30) Priorität: 05.05.2015 DE 102015208224
(71) Anmelder: MTU Aero Engines AG, 80995 München (DE)
(72) Erfinder: Gindorf, Alexander, 85247 Schwabhausen (DE); Huttner, Roland, 82287 Jesenwang (DE); Fessler-Knobel, Martin, 80639 München (DE); Weber, Julian, 80797 München (DE); Cernay, Christoph, 83052 Bruckmühl (DE)

(57) **Zusammenfassung**

Die Erfindung betrifft eine Vorrichtung und ein entsprechendes Verfahren zur Herstellung von Bürstendichtungen mit schräggestellten Borsten. Das Verfahren umfasst folgende Schritte: Als Erstes wird ein aus einem Borstenmaterial bestehender Metallischer Faden oder Draht (50) über zwei parallel zueinander verlaufende und beabstandete Drahtkerne (42, 46) zu einer dichten Metallischer Faden oder Drahtpackung (48) gewickelt. Als Nächstes wird die Metallischer Faden oder Drahtpackung (48) an mindestens einen Drahtkern (42, 46) befestigt. Dann wird der Bereich um mindestens einem der beiden Drahtkerne (42, 46) lokal aufgewärmt. Anschließend wird mindestens einer der beiden Drahtkerne (42, 46) verschoben.

## Beschreibung

Die Erfindung betrifft ein Verfahren zur Herstellung von Bürstendichtungen mit schräggestellten Borsten nach dem Oberbegriff des Anspruchs 1. Die Erfindung betrifft ferner ein Vorrichtung zur Herstellung von Bürstendichtungen mit schräggestellten Borsten nach dem Oberbegriff des Anspruchs 11.

Die Herstellung von Bürstendichtungen mit schräggestellten Metallborsten ist beispielsweise aus der Druckschrift DE 36 06 284 C2 bekannt. Dabei wird ein metallischer Faden oder Draht über zwei parallel zueinander angeordnete und beabstandete Drahtkerne zu einer dichten metallischen Faden- oder Drahtpackung gewickelt. Anschließend wird die metallische Faden- oder Drahtpackung mittels einer Klemmleiste an den entsprechenden Drahtkern fixiert. Die Klemmleisten werden bei Raumtemperatur mittels eines Rahmens dann zueinander parallel verschoben. Dafür sind hohe Kräfte erforderlich. Dabei biegen die Borsten in der Nähe der Drahtkerne ab und der sogenannte Legewinkel wird angelegt. Zum Fixieren des Legewinkels der Borsten muss die Bürstendichtung einer Wärmebehandlung unterzogen werden. Dabei wird der ca. 30 kg schwere Rahmen mit eingespannter Bürstendichtung in einem Ofen über eine Stunde bei einer Temperatur zwischen 500°C und 1000°C spannungsarm geglüht. Bei diesem Prozess verschleißt der Rahmen und muss regelmäßig ausgetauscht werden. Aufgrund des Verschleißes am Rahmen ist außerdem ein Rollprozess zum Einstellen des korrekten Außendurchmessers der Klemmleiste sowohl vor als auch nach der Wärmebehandlung notwendig. Dies hat den Nachteil, dass zusätzliche Herstellschritte notwendig sind und Bürstendichtungen in der Herstellung unnötig teuer sind.

Somit liegt der vorliegenden Erfindung die Aufgabe zu Grunde ein Verfahren zur Herstellung von Bürstendichtungen mit schräggestellten Borsten vorzustellen, wobei das Verfahren die Wärmebehandlungszeit drastisch verkürzt und die aufzuwendende Verformungskräfte stark verringert. Ferner liegt der vorliegenden Erfindung die Aufgabe zu Grunde, eine entsprechende Vorrichtung vorzustellen.

Die Aufgabe wird durch die Merkmale des Anspruchs 1 gelöst. Die Aufgabe wird ferner durch die Merkmale des Anspruchs 11 gelöst.

Die Erfindung betrifft ein Verfahren zur Herstellung von Bürstendichtungen mit schräggestellten Borsten. Das Verfahren umfasst die folgenden Schritte. Als Erstes wird in Schritt a.) ein aus einem Borstenmaterial bestehender metallischer Faden oder Draht über zwei parallel zueinander verlaufende und beabstandete Drahtkerne zu einer dichten metallischen Faden- oder Drahtpackung gewickelt. Vorzugsweise wird als Borstenmaterial Metall verwendet. Als Nächstes wird in Schritt b.) die metallische Faden- oder Drahtpackung an mindestens einen Drahtkern befestigt. Dann wird in Schritt c.) der Bereich um mindestens einem der beiden Drahtkerne lokal aufgewärmt. Anschließend wird in Schritt d.) mindestens einer der beiden Drahtkerne verschoben. Das Aufwärmen erfolgt vorzugsweise bei einer Temperatur von 500°C bis 1000°C für maximal 15 min. Der Temperaturbereich kann zwischen 700° und 800°C oder zwischen 720°C und 780°C liegen. Dabei wird die Wärmebehandlung in Schritt c.) als spannungsarmes Glühen angesehen.

Es sei angemerkt, dass der Aufwärmschutt in Schritt c.) grundsätzlich vor, während oder auch nach der Verschiebung in Schritt d.), vorzugsweise jedoch vor der Verschiebung in Schritt d.) erfolgt.

Dieses Verfahren hat den Vorteil, dass nicht die ganze Rahmenkonstruktion zur Befestigung der Bürstendichtung aufgeheizt werden muss. Es wird hier folglich nur lokal an der notwendigen Stelle aufgewärmt. Dies spart sehr viel Bearbeitungszeit.

In einer Ausgestaltung der Erfindung erfolgt kann das Befestigen in Schritt b.) durch Schweißen oder Kleben, insbesondere aber durch formschlüssiges Verbinden erfolgen.

In einer weiteren vorteilhaften Ausgestaltung der Erfindung erfolgt in Schritt b.) das Befestigen durch Überstülpen mindestens einer Klemmleiste über mindestens einen Drahtkern. Insbesondere handelt es sich bei der Klemmleiste um ein c-förmiges Rohr. Der Außendurchmessers des c-Rohrs stellt die auf die Borsten ausgeübte Klemmkraft ein. Auch andere Geometrien sind denkbar. Die Klemmleiste kann beispielsweise auch eine rechteckige oder vieleckige Außengeometrie aufweisen.

In einer weiteren vorteilhaften Ausgestaltung der Erfindung wird nach Schritt b.) und vor Schritt d.) mindestens ein Drahtkern an einer Befestigungsbacke fixiert. Vorzugsweise ist der eine Drahtkern an der einen Befestigungsbacke fixiert. Und der andere Drahtkern ist an der anderen Befestigungsbacke fixiert. Dies hat den Vorteil, dass die zwischen den Drahtkernen angeordnete metallische Faden- oder Drahtpackung gespannt bleibt, so dass die einzelnen Borsten in der metallischen Faden- oder Drahtpackung im Wesentlichen zueinander parallel ausgerichtet sind.

In einer weiteren vorteilhaften Ausgestaltung der Erfindung erfolgt in Schritt c.) das Aufwärmen durch mindestens eine in mindestens einer Befestigungsbacke angeordneten Induktionsspule.

Dies hat den Vorteil, dass sich ein Wirbelstrom nur im Drahtkern und/oder in der Klemmleiste bildet. Die Drahtkerne samt Klemmleisten wärmen sich dadurch auf und geben ihre Wärme an die unmittelbare Umgebung wie z. B. den Borsten ab. Mit einer Induktionsspule lässt sich gezielt und nur lokal die "Knickstelle" der Borsten aufheizen. Insbesondere wird die Temperatur von 500°C bis 1000°C innerhalb weniger Minuten erreicht, wobei die Temperatur während des Prozesses der induktiven Erwärmung erfasst und falls notwendig individuell geregelt werden kann.

Befindet sich beispielsweise nur in der linken Befestigungsbacke eine Induktionsspule, so können auch nur die in der linken Befestigungsbacke angeordneten Borsten geneigt und fixiert werden. Die in einer rechten Befestigungsbacke (ohne Induktionsspule) angeordneten Borsten erfahren keine Wärmebehandlung, so dass gleichzeitig Bürstendichtung mit und ohne geneigte Borsten hergestellt werden können. Die Borsten ohne Wärmebehandlung biegen sich wieder in ihre radiale Ausgangslage zurück.

Vorzugsweise weisen beide Befestigungsbacken jeweils mindestens eine Induktionsspule auf. Insbesondere wird mindestens eine der beiden Induktionsspule mit einer Frequenz im Wirbelstrom betrieben. Die Wirbelstromfrequenz kann hierbei beispielsweise zwischen 1 kHz und 50 kHz liegen.

Es sei erwähnt, dass der gesamte beschriebene und erfindungsgemäße Prozess sowohl manuell geregelt werden kann als auch insbesondere durch präzise abgestimmte und voreingestellte Steuerung und Regelung der Prozessparameter möglich ist.

In einer weiteren vorteilhaften Ausgestaltung der Erfindung ist in Schritt c.) während dem Aufwärmen die metallische Faden- oder Drahtpackung, mindestens ein Drahtkern und/oder mindestens eine Klemmleiste von einem Schutzgas umgeben. Dies hat den Vorteil, dass die metallischen Bürstendichtung nicht anlaufen können. Außerdem wird verhindert, dass sich unerwünschte Oxide bilden.

In einer weiteren vorteilhaften Ausgestaltung der Erfindung wird in Schritt d.) mindestens ein Drahtkern innerhalb einer Drahtebenen und/oder senkrecht zu einer Drahtebenen verschoben. Beim Verschieben ist darauf zu achten, dass die Drahtkerne immer parallel zueinander verlaufen. Die Drahtebene ergibt sich nach Schritt a.), bei dem die beiden Drahtkerne und die metallische Faden- oder Drahtpackung in einer Ebene angeordnet sind. Dabei ist es vorteilhaft nicht nur Bürstendichtungen mit in Umfangsrichtung schräggestellten Borsten herzustellen, sondern auch Bürstendichtungen mit in Axialrichtung schräggestellten Borsten herzustellen. Dabei können die Trennflächen bzw. Anlageflächen mindestens eines Paares Befestigungsbacken zusammenfallen.

In einer weiteren vorteilhaften Ausgestaltung der Erfindung wird nach Schritt d.) die metallische Faden- oder Draht oder Drahtpackung, mindestens ein Drahtkern und/oder mindestens eine Klemmleiste auf Raumtemperatur abgekühlt. Vorzugsweise ist die ganze Bürstendichtung auf Raumtemperatur abgekühlt, so dass die Schrägstellung der Borsten fixiert ist.

In einer weiteren vorteilhaften Ausgestaltung der Erfindung wird nach Schritt d.) die zwischen den beiden Drahtkernen befindliche metallische Faden- oder Drahtpackung durchtrennt. Vorzugsweise erfolgt das Durchtrennen mittig, so dass mit diesem Verfahren gleichzeitig zwei identische Bürstendichtungen hergestellt werden können. Weicht die Trennebene von der Mittelebene ab, so können gleichzeitig zwei Bürstendichtungen mit unterschiedlicher Borstenlänge hergestellt werden.

Durch die lokale Wärmebehandlung mittels induktiver Erwärmung und Einspannen in keramische Befestigungsbacken kann das Verfahren so gestaltet werden, dass erst unter Temperatur die Kräfte aufgebracht werden, um die Bürstendrähte in die gewünschte Lage zu bringen. Der Hauptunterschied zur globalen Wärmebehandlung ist die primäre Erwärmung der vorzugsweise c-förmigen Klemmleiste und des Drahtkerns per Induktion. Die Erwärmung der Borstendrähte erfolgt dann sekundär durch Wärmeleitung an der Stelle des Austritts aus der Klemmleiste. Dadurch kann die Erwärmung sehr schnell und mit geringer Haltezeit erfolgen. Dabei sind die Haltekräfte zur Herstellung des Legewinkels deutlich kleiner als bei der nachträglichen Wärmebehandlung im Ofen.

Die Erfindung betrifft ferner eine Vorrichtung zur Herstellung von Bürstendichtungen mit schräggestellten Borsten. Die Vorrichtung umfasst mindestens zwei Befestigungsbacken, wobei mindestens eine Befestigungsbacke eine Spulenaufnahme und eine Bürstenaufnahme zum Befestigen eines Teils einer Bürste aufweist. Dabei weist mindestens eine Befestigungsbacke mindestens eine Spulenaufnahme und mindestens eine Wärmequelle auf, die in der Spulenaufnahme angeordnet ist.

In einer weiteren vorteilhaften Ausgestaltung der Erfindung ist mindestens eine Befestigungsbacke aus einem, insbesondere hochfesten, keramischen Werkstoff hergestellt. Dies bietet den Vorteil, dass die Befestigungsbacken kaum Wärme aufnehmen, so dass diese Backen auch weniger schnell verschleißen. Insbesondere ist die Wärmequelle bei einem keramischen Werkstoff wegen der schlechten Wärmeleitfähigkeit sehr nahe zur Bürstenaufnahme angeordnet. Die Bürstenaufnahme weist vorzugsweise einen Innendurchmesser auf, der dem Außendurchmesser des c-förmigen Klemmrohrs entspricht. Durch den kaum vorhandenen Verschleiß des keramischen Werkstoffs ist auch keine Vorbearbeitung und Nachbearbeitung der um den Drahtkern angeordneten Klemmleiste notwendig.

In einer weiteren vorteilhaften Ausgestaltung der Erfindung ist zwischen den beiden Befestigungsbacken mindestens ein Anschlagselement angeordnet. Alternativ oder in Kombination dazu sind die beiden Befestigungsbacken über eine Parallelführung miteinander verbunden. Die Parallelführung kann beispielsweise mittels einer zweiachsigen Bewegung eines mechanischen und/oder hydraulischen Antriebs erfolgen. Eine Parallelführung ist nicht notwendig, da die parallele Ausrichtung auch über das Anschlagselement übernommen werden kann. Dazu können die gegenüberliegenden Anschlagsflächen des Anschlagselementes parallel zueinander verlaufen.

In einer weiteren vorteilhaften Ausgestaltung der Erfindung weist das Anschlagselement einen Gaseinlass, einen Gasauslass und/oder eine Kammer auf. Vorzugsweise ist die metallische Faden- oder Drahtpackung während der Wärmebehandlung innerhalb dieser Kammer angeordnet. Die Gasanschlüsse stehen in fluider Kommunikation mit der Kammer. Durch die Gasanschlüsse kann Schutzgas, wie z.B. Argon und/oder Helium, in die Kammer geleitet werden. Dies bietet in vorteilhafter Weise eine integrierte Schutzgasabschirmung mit sehr geringem Gasverbrauch an. Ferner kann das Schutzgas den Abkühlprozess weiter beschleunigen.

Weitere vorteilhafte Ausgestaltungen der Erfindung sind in den Unteransprüchen wiedergegeben.

Im Weiteren werden anhand der schematischen Zeichnung bevorzugte Ausführungsbeispiele der Erfindung näher beschrieben. Dabei zeigen:
- Figur 1: einen Schnitt durch die erfindungsgemäße Vorrichtung, wobei der Legewinkel der eingespannten Bürstendichtung null beträgt,
- Figur 2: einen Schnitt durch die erfindungsgemäße Vorrichtung, wobei die Borsten in axialer Richtung geneigt sind,
- Figur 3: eine Draufsicht auf die Drahtebene der Vorrichtung, wobei die Borsten in Umfangsrichtung geneigt sind.

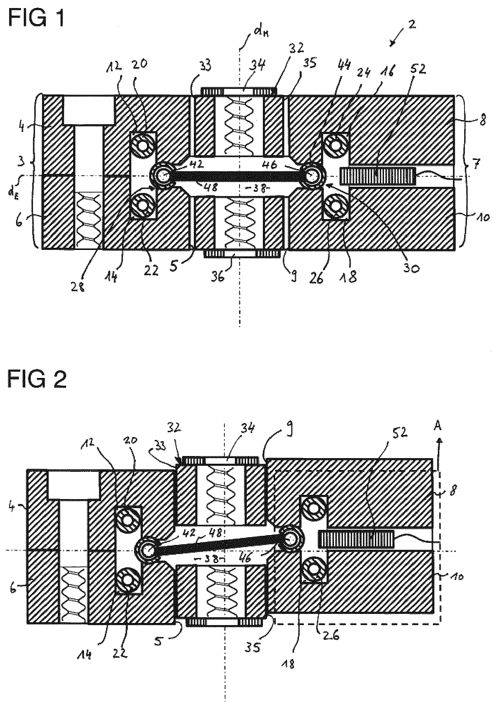

Die Figur 1 zeigt einen vertikalen Schnitt durch die erfindungsgemäße Vorrichtung 2. Die Vorrichtung umfasst links in der Figur 1 ein erstes Paar 3 übereinander angeordneter Befestigungsbacken 4 und 6 und rechts in der Figur ein zweites Paar 7 übereinander angeordneter Befestigungsbacken 8 und 10. Jede Befestigungsbacke 4 bis 10 weist jeweils eine Spulenaufnahme 12 bis 18 auf, in der jeweils eine Induktionsspule 20 bis 26 angeordnet ist. Das in der Figur 1 linke Paar 3 Befestigungsbacken 4 und 6 weist rechts von den beiden Spulenaufnahmen 12 und 14 eine erste Bürstenaufnahme 28 auf. In der ersten Bürstenaufnahme 28 ist eine erste vorzugsweise c-förmige Klemmleiste 40 eingespannt, die über einen ersten Drahtkern 42 gestülpt ist. Der Außendurchmesser der ersten Klemmleiste 40 entspricht dem Innendurchmesser der ersten Bürstenaufnahme 28. Das in Figur 1 rechte Paar 7 Befestigungsbacken 8 und 10 weist links von den beiden Spulenaufnahmen 16 und 18 eine zweite Bürstenaufnahme 30 auf. In der zweiten Bürstenaufnahme 30 ist eine zweite vorzugsweise c-förmige Klemmleiste 44 eingespannt, die über einen zweiten Drahtkern 46 gestülpt ist. Der Außendurchmesser der zweiten Klemmleiste 44 entspricht dem Innendurchmesser der zweiten Bürstenaufnahme 30. Zwischen den beiden Drahtkernen 42 und 46 verläuft die metallische Faden- oder Drahtpackung 48, wobei der einzelne insbesondere metallische Faden oder Draht 50 wechselweise um die Drahtkerne 42 und 46 gewickelt ist. Die beiden Klemmleisten 40 und 44 fixieren die metallische Faden- oder Drahtpackung 48 auf dem entsprechenden Drahtkern 42 bzw. 46. Hierbei definieren die metallische Faden- oder Drahtpackung 48 und die beiden Klemmleisten 40 und 44 die Drahtebene d_{E}, die in der Figur 1 horizontal verläuft. Die Trennflächen der Befestigungsbacken 4 bis 10 liegt in diesem Ausführungsbeispiel in der Drahtebene d_{E}.

Es ist anzumerken, dass vorzugsweise der Durchmesser des metallischen Fadens oder Drahts 50 kleiner ist als der Durchmesser mindestens eines der beiden Drahtkerne 42 und 46. Vorzugsweise sind die Durchmesser der beiden Drahtkerne 42 und 46 identisch.

Zwischen den beiden Paaren Befestigungsbacken 4 bis 10 ist ein Anschlagselement 32 angeordnet. In der Figur 1 oben weist das Anschlagselement 32 einen Gaseinlass 34 und in der Figur 1 unten einen Gasauslass 36 auf. Zwischen den beiden Gasanschlüssen 34 und 36 ist im Anschlagselement 32 eine Kammer 38 eingelassen. Das Anschlagselement 32 ist derart zwischen den Befestigungsbacken 4 bis 10 angeordnet, dass die metallische Faden- oder Drahtpackung 48 innerhalb der Kammer 38 verläuft. Dabei ist ferner die rechte Anschlagsfläche 5 der linken Befestigungsbacken 4 und 6 von der linken Anschlagsfläche 33 des Anschlagselements 32 beabstandet. Dabei ist ferner die linke Anschlagsfläche 9 der rechten Befestigungsbacken 8 und 10 von der rechten Anschlagsfläche 35 des Anschlagselements 32 beabstandet. Vorzugsweise verlaufen die Anschlagsflächen 5, 9, 33 und 35 parallel zueinander. Ist dies der Fall, dann kann auf eine (nicht abgebildete) Parallelführung verzichtet werden.

Ferner ist im rechten Paar 7 Befestigungsbacken 8 und 10 in der Nähe der Induktionsspulen 16 und 18 mindestens ein Temperatursensor 52 angeordnet.

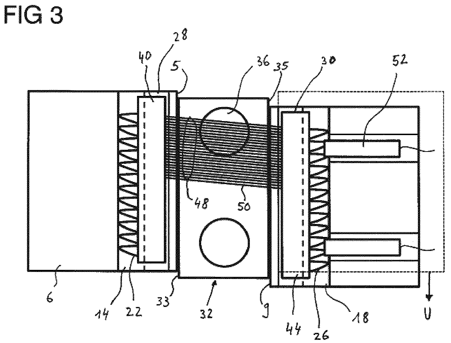

Nachdem das Bürstendichtungspaar samt den beiden Klemmleisten 40 und 42 und den beiden Drahtkernen 42 und 46 in den Befestigungsbacken 4 bis 10 eingespannt ist, werden die Induktionsspulen 20 bis 26 eingeschaltet. Dabei kann über die Gasanschlüsse 34 und 36 Schutzgas in die Kammer 38 geleitet werden, um das metallische Material der Bürstendichtung 40 vor Oxidation zu schützen. Der Temperatursensor 52 misst die entstandene Temperatur. Die Wärmebehandlung kann dabei gesteuert oder aber auch geregelt werden. Nach Erreichen der Zieltemperatur kann beispielsweise das rechte Paar Befestigungsbacken 8 und 10 verschoben werden.
Dies ist in den Figuren 2 und 3 gezeigt.

Die Figur 2 zeigt ebenfalls einen Vertikalschnitt durch die Vorrichtung 2. Im Vergleich zur Ausgangslage, wie sie in der Figur 1 abgebildet ist, wurde in Figur 2 das rechte Paar 7 Befestigungsbacken 8 und 10 senkrecht zur Drahtebene d_{E} verschoben bis die linke Anschlagsfläche 33 vom Anschlagselement 32 gegen die rechte Anschlagsfläche 5 des linken Befestigungspaares 4 und 6 anliegt und die rechte Anschlagsfläche 35 vom Anschlagselement 32 gegen die linke Anschlagsfläche 9 des rechten Befestigungspaares 8 und 10 anliegt. Der gestrichelte Rahmen zeigt die ursprüngliche Position des rechten Befestigungspaars 8 und 10 in Figur 1. Bei dieser Verschieberichtung wird das metallische Faden- oder Drahtpaket in axialer Richtung A gebogen. Die axiale Richtung bezieht sich auf die spätere Einbaulage in einem Triebwerk.

Die Figur 3 zeigt einen Horizontalschnitt entlang der Drahtebene d_{E}. Dabei sind nur die unteren Elemente der Befestigungsvorrichtung 2 aus der Figur 1 erkennbar. In der linken unteren Befestigungsbacke 6 ist in der linken unteren Aufnahme 14 die linke untere Spule 22 angeordnet. In der rechten unteren Befestigungsbacke 10 ist in der rechten unteren Aufnahme 18 die rechte untere Spule 26 angeordnet. Darüber hinaus sind zwei Temperatursensoren 52 erkennbar. Im Vergleich zur Ausgangslage wie sie in der Figur 1 abgebildet ist, wurde nun in der Figur 3 die rechte Befestigungsbacke 10 entlang der Drahtebene d_{E} verschoben bis die linke Anschlagsfläche 33 vom Anschlagselement 32 gegen die rechte Anschlagsfläche 5 der linken Befestigungsbacke 6 anliegt und die rechte Anschlagsfläche 35 vom Anschlagselement 32 gegen die linke Anschlagsfläche 9 der rechten Befestigungsbacke 10 anliegt. Es ist anzumerken, dass die Blattebene mit der Drahtebene d_{E} übereinstimmt. Der gestrichelte Rahmen zeigt die ursprüngliche Position der rechten Befestigungsbacke 10 in Figur 1. Dabei wird das metallische Faden- oder Drahtpaket in Umfangsrichtung U gebogen. Die Umfangsrichtung U bezieht sich auf die spätere Einbaulage in einem Triebwerk.

In den beiden Ausführungsbeispielen wurde nur das rechte Befestigungspaar 7 verschoben. Selbstverständlich kann auch das linke Befestigungspaar 5 verschoben werden. Auch können die Befestigungsbacken 4 bis 10 schräg zur Drahtebene verschoben werden, sodass dann die Borsten sowohl in Umfangsrichtung als auch in axialer Richtung verbogen sind. Somit kann beim Verschrägen der Borsten eine Dichtung mit axialem Legewinkel (siehe Figur 3) und radialem Legewinkel (siehe Figur 2) in einem einzigen Prozessschritt hergestellt werden. Nachdem der Lagewinkel eingestellt wurde, wird das Bürstendichtungspaar auf Raumtemperatur abgekühlt. Die metallische Faden- oder Drahtpackung 48 kann mittig entlang der Ebene d_{M} durchtrennt werden, so dass zwei Bürstendichtungen mit gleichlangen Borsten entstehen.

### Bezugszeichenliste

- 2: Vorrichtung
- 4: linke obere Befestigungsbacke
- 5: erstes Befestigungspaar
- 6: linke untere Befestigungsbacke
- 7: rechte Anschlagsfläche von 4 und 6
- 8: rechte obere Befestigungsbacke
- 9: zweites Befestigungspaar
- 10: rechte untere Befestigungsbacke
- 11: linke Anschlagsfläche von 8 und 10
- 12 bis 18: Spulenaufnahme
- 20 bis 26: Induktionsspule
- 28: erste Bürstenaufnahme
- 30: zweite Bürstenaufnahme
- 32: Anschlagselement
- 33: linke Anschlagsfläche von 32
- 34: Gaseinlass
- 35: rechte Anschlagsfläche von 32
- 36: Gasauslass
- 38: Kammer
- 40: erste Klemmleiste
- 42: erster Drahtkern
- 44: zweite Klemmleiste
- 46: zweiter Drahtkern
- 48: metallische Faden- oder Drahtpackung
- 50: einzelner metallischer Faden oder Draht
- 52: Temperatursensor
- A: axiale Richtung
- d_{E}: Drahtebene
- d_{M}: Mittelebene
- U: Umfangsrichtung

## Patentansprüche

1. Verfahren zur Herstellung von Bürstendichtungen mit schräggestellten Borsten, das die folgenden Schritte umfasst:
a. Wickeln eines aus einem Borstenmaterial bestehenden metallischen Fadens oder Drahts (50) über zwei parallel zueinander verlaufende und beabstandete Drahtkerne (42, 46) zu einer dichten metallischen Faden- oder Drahtpackung (48),
b. Befestigen der metallischen Faden- oder Drahtpackung (48) an mindestens einen Drahtkern (42, 46),
**gekennzeichnet durch** die folgenden Schritte:
c. lokales Aufwärmen des Bereichs um mindestens einem der beiden Drahtkerne (42, 46), und
d. Verschieben mindestens einer der beiden Drahtkerne (42, 46) unter Erhalt einer Bürstendichtung mit schräggestellten Borsten aus einem metallischen Borstenmaterial mit einer dichten metallischen Faden- oder Drahtpackung (48).

2. Verfahren nach Anspruch 1, **dadurch gekennzeichnet, dass** in Schritt b.) das Befestigen durch Schweißen oder Kleben, insbesondere aber durch formschlüssiges Verbinden erfolgt und/oder dass beim Verschieben in Schritt d.) eine Bürstendichtung sowohl mit axialem als auch radialem Lagewinkel in einem Prozessschritt hergestellt werden kann.

3. Verfahren nach mindestens einem der vorherigen Ansprüche, **dadurch gekennzeichnet, dass** in Schritt b.) das Befestigen durch Überstülpen mindestens einer Klemmleiste (40, 44) über mindestens einen Drahtkern (42, 46) erfolgt.

4. Verfahren nach mindestens einem der vorherigen Ansprüche, **dadurch gekennzeichnet, dass** nach Schritt b.) und vor Schritt d.) mindestens ein Drahtkern (42, 46) an einer Befestigungsbacke (4, 6 ,8, 10) fixiert wird.

5. Verfahren nach mindestens einem der vorherigen Ansprüche, **dadurch gekennzeichnet, dass** in Schritt c.) das Aufwärmen durch mindestens eine in mindestens einer Befestigungsbacke (4, 6 ,8, 10) angeordneten Induktionsspule (20, 22, 24, 26) erfolgt.

6. Verfahren nach Anspruch 5, **dadurch gekennzeichnet, dass** die Induktionsspule (20, 22, 24, 26) mit einer Frequenz im Wirbelstrom betrieben wird.

7. Verfahren nach mindestens einem der vorherigen Ansprüche, **dadurch gekennzeichnet, dass** in Schritt c.) während dem Aufwärmen die Metallischer Faden oder Drahtpackung (48), mindestens ein Drahtkern (42, 46) und/oder mindestens eine Klemmleiste (40, 44) von einem Schutzgas umgeben ist.

8. Verfahren nach mindestens einem der vorherigen Ansprüche, **dadurch gekennzeichnet, dass** in Schritt d.) mindestens ein Drahtkern (42, 46) innerhalb einer Drahtebene (d_{E}) und/oder senkrecht zu einer Drahtebene (d_{E}) verschoben wird.

9. Verfahren nach mindestens einem der vorherigen Ansprüche, **dadurch gekennzeichnet, dass** nach Schritt d.) die metallische Faden- oder Drahtpackung (48), mindestens ein Drahtkern (42, 46) und/oder mindestens eine Klemmleiste (40, 44) auf Raumtemperatur abgekühlt wird.

10. Verfahren nach mindestens einem der vorherigen Ansprüche, **dadurch gekennzeichnet, dass** nach Schritt d.) die zwischen den beiden Drahtkernen (42, 46) befindliche metallische Faden- oder Drahtpackung (48) durchtrennt wird.

11. Vorrichtung zur Herstellung von Bürstendichtungen mit schräggestellten Borsten umfasst:
- mindestens zwei Befestigungsbacken (4, 6, 8, 10), wobei mindestens eine Befestigungsbacke (4, 6, 8, 10) eine Spulenaufnahme (12 bis 18) und eine Bürstenaufnahme (28, 30) zum Befestigen eines Teils einer Bürste aufweist,
**dadurch gekennzeichnet, dass**
mindestens eine Befestigungsbacke (4, 6, 8, 10) mindestens eine Spulenaufnahme (12 bis 18) und mindestens eine Wärmequelle (20 bis 26) aufweist, die in der Spulenaufnahme (12 bis 18) angeordnet ist.

12. Vorrichtung nach Anspruch 11, **dadurch gekennzeichnet, dass** mindestens eine Befestigungsbacke (4, 6 , 8, 10) aus einem keramischen Werkstoff hergestellt ist.

13. Vorrichtung nach mindestens einem der Ansprüche 11 bis 12, **dadurch gekennzeichnet, dass** zwischen den Befestigungsbacken (4, 6, 8, 10) mindestens ein Anschlagselement (32) angeordnet ist und/oder mindestens zwei Befestigungsbacken (4, 6; 8, 10) über eine Parallelführung miteinander verbunden sind.

14. Vorrichtung nach Anspruch 13, **dadurch gekennzeichnet, dass** das Anschlagselement (32) einen Gaseinlass (34), einen Gasauslass (36) und/oder eine Kammer (38) aufweist.
